# EUROPEAN PATENT SPECIFICATION

(11) **EP 3 899 366 B1**
(45) Date of publication and mention of the grant of the patent: **18.05.2022**
(21) Application number: 19828659.3
(22) Date of filing: 16.12.2019
(51) Int. Cl.: F21V 31/00, F21V 3/00, F21V 17/10, F16B 3/00

(54) **A LIGHTING DEVICE**
BELEUCHTUNGSVORRICHTUNG
DISPOSITIF D'ÉCLAIRAGE

(30) Priority: 18.12.2018 EP 18213325
(43) Date of publication of application: 27.10.2021
(73) Proprietor: Signify Holding B.V., 5656 AE Eindhoven (NL)
(72) Inventor: BIJLSMA, Albert, 5656 AE Eindhoven (NL); VAN EGGELEN, Arno, 5656 AE Eindhoven (NL); VAN OS, Petrus, Johannes, Maria, 5656 AE Eindhoven (NL); SEYMENN, Ibrahim, 5656 AE Eindhoven (NL); VAN DOOREN-SWEEGERS, Henrica, Ildephonse, Aubertine, Jacqueline, 5656 AE Eindhoven (NL); HORVATH, Viktor, 5656 AE Eindhoven (NL); TREURNIET, Theodoor, Cornelis, 5656 AE Eindhoven (NL)
(74) Representative: Stil, Lambert Johannes
(86) International application number: PCT/EP2019/085351
(87) International publication number: WO 2020/127050

(56) References cited:
- FR-A1- 2 831 229
- JP-A- H07 312 113
- US-A1- 2016 195 770

## Description

### FIELD OF THE INVENTION

The present invention relates to a lighting device comprising a base, a light aggregate on the base, and a lens member covering the light aggregate and being attached to the base, wherein the lens member has a periphery, wherein the base and the lens member respectively comprise a plurality of mounting holes each having an internal surface, the mounting holes of the lens member being positioned along the periphery of the lens member, whereby mounting holes of the lens member are aligned with mounting holes of the base, and mounting elements are extending in respective aligned mounting holes and are being fixed in said mounting holes thereby fixing the lens member to the base.

At least some embodiments of the invention relate to LED luminaires, especially outdoor LED luminaires.

### BACKGROUND OF THE INVENTION

A lighting device of the art mentioned above is known from JP 2996094 B2, which discloses a lighting device comprising a base and a lens member that are interconnected by means of tubular rivets or eyelets that are inserted through mounting holes spaced around the peripheries of the base and the lens member. As an alternative to the eyelets, screws may be used. A trim is supplied around the joint peripheries and is fastened by means of an adhesive agent that is supplied to the inner holes of the tubular rivets. Further adhesive agent supply holes, free of rivets, are provided in the joint peripheries of the base and the lens member. Adhesive agent supplied to the latter holes may penetrate between the joint peripheral surfaces of the base and the lens member to adhere these surfaces.

For some lighting devices, e.g. LED luminaires, and especially in outdoor applications, resistance to weather conditions are require. Thus, specific resistance to dust and water is specified by an IP rating or IPxx rating (cf. International Protection Marking, IEC standard 60529). In order to make a lighting device or luminaire waterproof, it is common use to integrate a cover plate over an LED board for providing dust and water tightness. Thus it is known to provide a lens member that can be mounted over a lighting aggregate, such as an LED board, in order to comply to an IP rating.

Lens members, e.g. for IP66 outdoor modules, often come with a silicone gasket and need to be fixed by means of screws on a base, such as a metal plate that may function as a heat sink. Tightening the screws, the gasket is compressed between the lens member and the base, leading to resistance to water ingress. However, the present inventors have found that in some cases, during heating and cooling, the lens member expands and contracts more than the base in the form of a metal heat sink. As the lens member is fixed by the screws, movement between the lens member and the base during temperature cycle is limited or absent. This results in high stresses in the material of the lens member and eventually in cracks in the lens member.

It is noted that the manner of mutually attaching the base and the lens member of JP 2996094 B2 does not provide for movement between the lens member and the base.

It is an object of the present invention to overcome or minimize the above problem.

### SUMMARY OF THE INVENTION

This is obtained by a lighting device as mentioned by way of introduction, wherein each of the mounting elements, that are positioned within a coherent area extending along at least half of the periphery of the lens member, especially along at least three quarters of the periphery of the lens member, are yielding elements relative to the base and the lens member, said each of the mounting elements having a lower Young's modulus than the base and the lens member. Hereby is obtained that different expansion or contraction of the lens member relative to the base may result in relative movement between respective parts of the lens member and the base, the mounting element being elastically deformed, rather than high stresses being developed in the material of the lens member. It should be noted that the periphery has a linear and/or curvilinear extend and the coherent area at least within which each of the mounting elements are yielding elements extends along at least half of said extend of the periphery, especially along at least three quarters of said extent of the periphery of the lens member. In an embodiment each of said base and said lens member comprises a proximal surface, which is proximal relative to the respective other of said base and said lens member, and each of said base and said lens member comprises a distal surface, which is distal relative to the respective other of said base and said lens member.

In an embodiment said each of the mounting elements have a Young's modulus below 1 GPa.

In a further embodiment the Young's modulus of said mounting elements is below 0.1 GPa, especially below 0.05 GPa.

In an embodiment said each of the mounting elements, have a yield strain above 4%.

In a further embodiment the yield strain of said mounting elements is above 10%, especially above 50% and further especially above 200%.

These embodiments support the possibility of relative movement between respective parts of the lens member and the base, said mounting elements being elastically deformed.

Depending on the design of the base and especially of the lens member, a number of the mounting elements need not be yielding elements if along a part of the periphery of the lens member no substantial movement between the base and the lens member occurs, e.g. due to such part experiencing little variation of temperature during use. However, along at least half of the periphery and especially along three quarters of the periphery of the lens member the mounting elements should be yielding elements for taking up movements between the base and the lens member.

In some embodiments all of the mounting elements, possibly but one, are yielding elements.

In embodiments a gasket is positioned between the base and the lens member. Such gasket provides for tightness against water and/or dust between the lens member and the base. The gasket is elastic and in an embodiment the material of the gasket is or comprises silicone.

In an embodiment at least one of the mounting holes has at least a part of the internal surface thereof corrugate, especially threaded, to provide a positive engagement, i.e. a geometrical engagement, with, and thus a mechanical fixation of, the respective mounting element.

In an embodiment at least one of the mounting holes has an extended cross sectional area at the distal surface to provide a positive engagement with, and thus a mechanical fixation of, the respective mounting element.

Thus embodiments are provided for which the mounting elements need not adhere to the material of the lens member or the base.

In embodiments at least one of the mounting elements adheres to the internal surface of the respective mounting hole.

It is possible to combine the latter embodiments whereby mounting elements may engage positively, i.e. geometrically, and adhesively with the lens member and/or the base.

In an embodiment the base is a heat sink and in an embodiment the base is a metal base. These embodiments, that may be combined, are suitable for e.g. LED luminaires.

In at least some embodiments said each of the mounting elements comprises a polymer, and in at least some embodiments said each of the mounting elements comprises a material selected form the group of silicone rubber, silicone adhesive, and silicone sealant.

In embodiments at least one resilient clamp is provided that urges the lens member towards the base. Such embodiment may e.g. be used when a gasket is present between the lens member and the base and the use of such resilient clamp is especially beneficial when the mounting members do not provide sufficient force to compress the gasket to provide for tightness as mentioned above.

In a further, practical embodiment the resilient clamp comprises a spring fixed to the base.

The lens member may e.g. be a translucent or a transparent member.

### BRIEF DESCRIPTION OF THE DRAWINGS

The invention will now be explained in greater detail based on non-limiting exemplary embodiments and with reference to the schematic drawings on which:
Fig. 1 is an exploded view of a lighting device according to prior art;
Fig. 2 indicates a cross section through a base, a lens member, and a mounting member in a first embodiment of the present invention;
Fig. 3 indicates a cross section through a base, a lens member, and a mounting member in a second embodiment of the present invention;
Fig. 4 indicates a cross section through a base, a lens member, and a mounting member in a third embodiment of the present invention; and
Fig. 5 indicates a cross section through a base, a lens member, and a mounting member in a forth embodiment of the present invention.

### DETAILED DESCRIPTION OF EMBODIMENTS

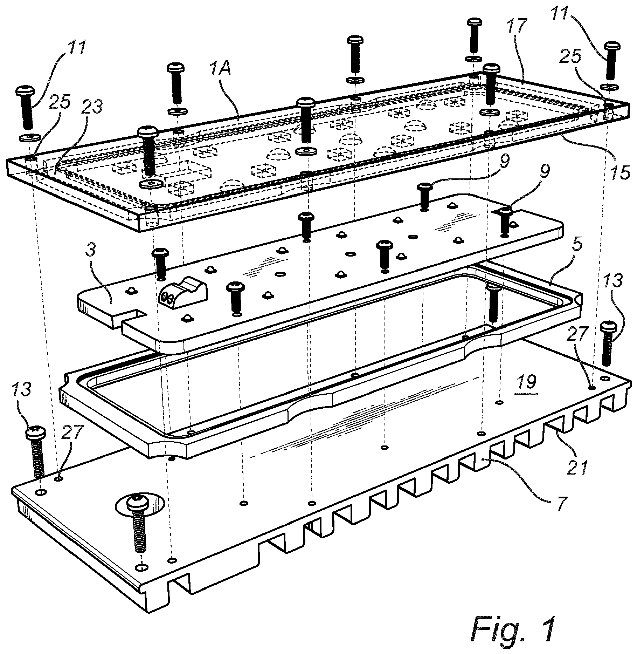

Fig. 1 shows an exploded view of a prior art lighting device comprising a lens member 1, a light aggregate 3, which in the present embodiment is an LED board, a gasket 5, e.g. a silicone gasket, and a base 7 which in the present embodiment is a metal base that functions as a heat sink for the light aggregate or LED board 3.

A first set of screws 9, or mounting elements, are provided for fastening the light aggregate 3 to the base 7, a second set of screws 11, or mounting elements, are provided for fastening the lens member 1 to the base 7 and a third set of screws 13, or mounting elements, are provided for mounting the lighting device in a lamp, not shown, or the like. As indicated in Fig. 1 mounting holes are provided in the lens member 1 and the light aggregate 3 for insertion of the screws 11, 9, respectively, and threaded mounting holes are provided in the base 7 for receiving the screws 11, 9. Whereas the mounting holes for the screws 9 are blind holes to avoid ingress of water or dust into the water and dust sensitive parts of the lighting device, the mounting holes for the screws 11 may in the prior art device be through holes or blind holes. The mounting holes of the lens member 1 are provided along a periphery 1A of the lens member 1.

The lens member 1 has a proximal surface 15 facing the light aggregate 3 and the base 7 and a distal surface 17 facing away from the light aggregate 3 and the base 7. Correspondingly the base 7 has a proximal surface 19 facing the light aggregate 3 and the lens member 1 and a distal surface 21 facing away from the light aggregate 3 and the lens member 1.

The lens member 1 comprises a groove 23, shown in broken lines indicating the lens member 1 to be translucent, said groove 23 extending into the proximal surface 15 thereof for receiving the gasket 5. The mounting holes in the lens member 1 for insertion of the screws 11 are positioned next to the groove 23 and accordingly the screws 11 do not pass through the gasket 5 in the embodiment shown in Fig. 1. When the lighting device of Fig. 1 is assembled and the screws 11 are tightened, the proximal surfaces 15 and 19 of the lens member 1 and the base 7, respectively, are bought in mutual close proximity without necessarily touching each other, the gasket 5 being compressed to provide for tightness against ingress of water and dust.

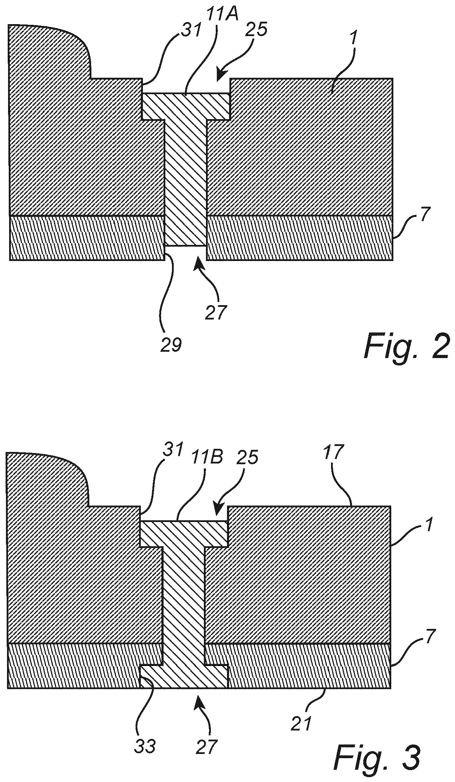

In the following reference is made to Figs. 2 to 5 that show cross sections through the base, the lens member, and a mounting member in four different embodiments of the present invention. Similar elements are denoted by similar reference numerals both in relation to the lighting device shown in Fig. 1 and the embodiments shown in Figs. 2 to 5.

It may be seen as a general idea of the invention to substitute the second set of screws 11 of the prior art lighting device of Fig. 1 by mounting elements 11A, 11B that are yielding elements relative to the base 7 and the lens member 1, said mounting elements 11A, 11B according to the invention having a lower Young's modulus than the base 7 and the lens member 1. The mounting elements 11A, 11B according to the present invention should thus be provided in the mounting holes at least along a major part of the periphery 1A of the lens element 1, i.e. along at least half of the periphery 1A and especially along three quarters of the periphery 1A of the lens member 1. In some embodiments all of the mounting elements 11A, 11B, possibly but one, are yielding elements.

Thus Fig. 2 shows parts of the lens member 1 and the base 7, respectively, and a mounting element 11A positioned in and extending between aligned mounting holes 25, 27 extending through the lens member 1 and the base 7, respectively. The mounting hole 27 in the base 7 is a threaded mounting hole having a corrugated internal surface 29 provided by an internal thread, and the mounting hole 25 in the lens member 1 has a portion 31 with an extended cross sectional area at the distal surface 17, relative to the cross sectional area of the mounting hole 25 at the proximal surface 15. The corrugated internal surface 29 and the extended cross sectional area of the portion 31 provide for positive or geometrical engagement between the mounting element 11A and the (mounting holes of the) lens member 1 and the base 7. Thus the mounting element 11A fixes the lens member 1 to the base 7.

Figs. 3 to 5 show embodiments in which the base 7, like the lens member 1 shown in Fig. 2, have a portion 33 of the mounting hole 27 with an extended cross sectional area at the distal surface 21, relative to the cross sectional area of the mounting hole 27 at the proximal surface 19. Thus in the embodiments shown in Figs. 3 to 5 the portions 31 and 33 with extended cross sectional areas provide for positive or geometrical engagement between the mounting element 11B and the (mounting holes of the) lens member 1 and the base 7.

Figs. 2 and 3 show embodiments in which a gasket is not present between the lens member 1 and the base 7 at the area which is penetrated by the mounting holes 25 and 27. However, like in the embodiment shown in Fig. 1 a gasket may be present between lens element 1 and the base 7 outside the parts shown in Figs. 2 and 3. Accordingly, though in the schematic Figures 2 and 3 the lens member 1 and the base 7 are shown to be in mutual contact, this need not be the case.

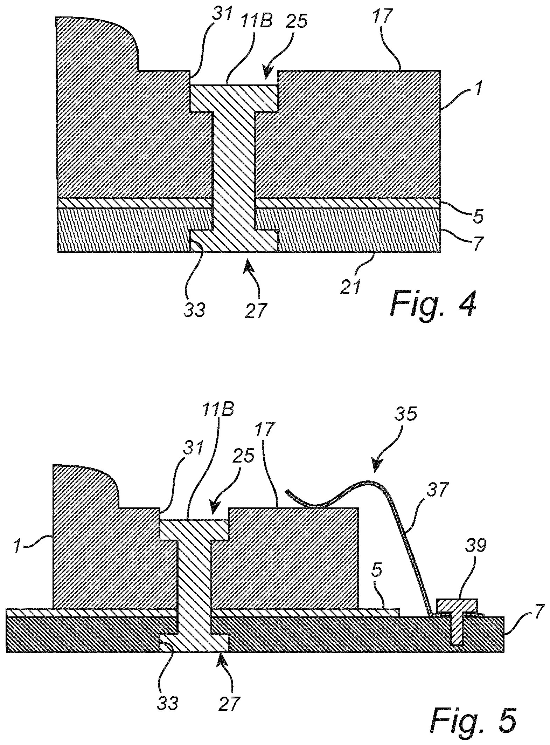

Figs. 4 and 5 show embodiments in which the gasket 5, or at least a portion thereof, extends between the lens member 1 and the base 7 at the area penetrated by the mounting holes 25, 27 for the mounting element 11B to extend through a mounting hole in the gasket 5.

In the embodiment shown in Fig. 5 a resilient clamp 35 is urging the lens member 1 towards the base 7. The resilient clamp 35 comprises a spring 37 and a screw 39 which is screwed into the base 7.

In embodiments of the present invention the mounting elements 11A, 11B, shown in Figs. 2 to 5 have a Young's modulus below 1 GPa, especially below 0.1 GPa, and more especially below 0.05 GPa, in order to minimize strain or stress in the material of, especially, the lens member e.g. due to differences in expansion and contraction of the lens member 1 and the base 7 during use due to variations of temperature.

Further, in embodiments of the present invention the mounting elements 11A, 11B, shown in Figs. 2 to 5 have a yield strain above 4%, especially above 10%, further, especially above 50% and still further, especially above 200%. Thus the mounting elements 11A, 11B allow movements between the lens member 1 and the base 7 at the areas of the mounting holes 25, 27 without fracture of the mounting elements 11A, 11B.

In some embodiments of the invention the mounting elements 11A, 11B a polymer which may e.g. comprise a material selected form the group of silicone rubber, silicone adhesive, and silicone sealant.

In an embodiment the mounting elements 11A, 11B comprise a material, such as silicone adhesive, e.g. Dow Corning^{®} 744, that is applied to the mounting holes 25, 27, after the lens member 1 has been positioned on the base 7, as a non-slump paste that subsequently is allowed to set to have properties similar to a flexible rubber.

When the mounting elements 11A, 11B are applied as a material, e.g. a paste material such as a non-slump paste, for subsequent setting, either a material that will shrink during setting may be used to provide for a tension in the mounting elements 11A, 11B that will compress any gasket 5 present between the base 7 and the lens member 1, or the lens member 1 should be urged towards the base 7 during application and setting of the material of the mounting elements 11A, 11B to ensure a compression of the gasket 5 that will provide for tightness as required by the circumstances. When such compression of the gasket 5 is not provided for by any tension present in the mounting elements 11A, 11B a resilient clamp like resilient clamp 35 may be relied upon.

Whereas in the above the invention has been described by means of an example it should be understood that this example is not limiting to the scope of the invention or the protection sought by the present application. The skilled person will i.a. understand that features of the embodiment described above may be varied in many ways. E.g. the general shape of the lighting device, which in the above example is rectangular, may be circular, elliptic, quadratic, polygonal, etc.

## Claims

1. A lighting device comprising a base (7), a light aggregate (3) on the base (7), and a lens member (1) covering the light aggregate (3) and being attached to the base (7), wherein the lens member (1) has a periphery (1A), wherein the base (7) and the lens member (1) respectively comprise a plurality of mounting holes (27, 25) each having an internal surface, the mounting holes (25) of the lens member (1) being positioned along the periphery (1A) of the lens member (1), whereby mounting holes (25) of the lens member (1) are aligned with mounting holes (27) of the base (7), and mounting elements (11A, 11B) are extending in respective aligned mounting holes (25, 27) and are being fixed in said mounting holes (25, 27) thereby fixing the lens member (1) to the base (7), **characterized in that** each of the mounting elements (11A, 11B) , that are positioned within a coherent area extending along at least half of the periphery of the lens member, especially along at least three quarters of the periphery (1A) of the lens member (1), are yielding elements relative to the base (7) and the lens member (1), said each of the mounting elements (11A, 11B) having a lower Young's modulus than the base (7) and the lens member (1).

2. A lighting device according to claim 1, wherein said each of the mounting elements (11A, 11B) have a Young's modulus below 1 GPa.

3. A lighting device according to claim 2, wherein the Young's modulus of said mounting elements (11A, 11B) is below 0.1 GPa, especially below 0.05 GPa.

4. A lighting device according to any one of the preceding claims, wherein said each of the mounting elements (11A, 11B) have a yield strain above 4%.

5. A lighting device according to claim 4, wherein the yield strain of said mounting elements (11A, 11B) is above 10%, especially above 50% and further especially above 200%.

6. A lighting device according to any one of the preceding claims, wherein a gasket (5) is positioned between the base (7) and the lens member (1).

7. A lighting device according to any one of the preceding claims, wherein at least one of the mounting holes (27) has at least a part of the internal surface (29) thereof corrugate, especially threaded, to provide a positive engagement with, and thus a mechanical fixation of, the respective mounting element (11A, 11B).

8. A lighting device according to any one of the preceding claims, wherein each of said base (7) and said lens member (1) comprises a distal surface (21, 17), which is distal relative to the respective other of said base (7) and said lens member (1), and wherein at least one of the mounting holes (25, 27) has a portion (31, 31) with an extended cross sectional area at the distal surface (17, 21) to provide a positive engagement with, and thus a mechanical fixation of, the respective mounting element (11A, 11B).

9. A lighting device according to any one of the preceding claims, wherein at least one of the mounting elements (11A, 11B) adheres to the internal surface of the respective mounting hole (25, 27).

10. A lighting device according to any one of the preceding claims, wherein the base (7) is a heat sink.

11. A lighting device according to any one of the preceding claims, wherein the base (7) is a metal base.

12. A lighting device according to any one of the preceding claims, wherein said each of the mounting elements (11A, 11B) comprises a polymer.

13. A lighting device according to any one of the preceding claims, wherein said each of the mounting elements (11A, 11B) comprises a material selected form the group of silicone rubber, silicone adhesive, and silicone sealant.

14. A lighting device according to any one of the preceding claims, wherein at least one resilient clamp (35) urges the lens member towards the base.

15. A lighting device according to claim 14, wherein the resilient clamp (35) comprises a spring (37) fixed to the base (7).

## Patentansprüche

1. Beleuchtungsvorrichtung umfassend eine Basis (7), ein Lichtaggregat (3) auf der Basis (7) und ein Linsenelement (1), das das Lichtaggregat (3) abdeckt und an der Basis (7) befestigt ist, wobei das Linsenelement (1) einen Umfang (1A) aufweist, wobei die Basis (7) und das Linsenelement (1) jeweils eine Vielzahl von Befestigungslöchern (27, 25) umfassen, die jeweils eine Innenfläche aufweisen, wobei die Befestigungslöcher (25) des Linsenelements (1) entlang des Umfangs (1A) des Linsenelements (1) angeordnet sind, wodurch die Befestigungslöcher (25) des Linsenelements (1) mit den Befestigungslöchern (27) der Basis (7) ausgerichtet sind und die Befestigungselemente (11A, 11B) sich in die jeweiligen ausgerichteten Montagelöcher (25, 27) erstrecken und in den Montagelöchern (25, 27) befestigt werden, wodurch das Linsenelement (1) an der Basis (7) befestigt wird, **dadurch gekennzeichnet, dass** jedes der Befestigungselemente (11A, 11B), die innerhalb eines zusammenhängenden Bereichs positioniert sind, der sich entlang mindestens der Hälfte des Umfangs des Linsenelements erstreckt, insbesondere entlang mindestens drei Viertel des Umfangs (1A) des Linsenelements (1), nachgiebige Elemente in Bezug auf die Basis (7) und das Linsenelement (1) sind, wobei jedes der Befestigungselemente (11A, 11B) einen niedrigeren Elastizitätsmodul als die Basis (7) und das Linsenelement (1) aufweist.

2. Beleuchtungsvorrichtung nach Anspruch 1, wobei jedes der Befestigungselemente (11A, 11B) einen Elastizitätsmodul unter 1 GPa aufweist.

3. Beleuchtungsvorrichtung nach Anspruch 2, wobei der Elastizitätsmodul der Befestigungselemente (11A, 11B) unter 0,1 GPa, insbesondere unter 0,05 GPa liegt.

4. Beleuchtungsvorrichtung nach einem der vorstehenden Ansprüche, wobei jedes der Befestigungselemente (11A, 11B) eine Streckgrenze von über 4 % aufweist.

5. Beleuchtungsvorrichtung nach Anspruch 4, wobei die Streckgrenze der Befestigungselemente (11A, 11B) über 10 %, insbesondere über 50 % und weiter insbesondere über 200 % liegt.

6. Beleuchtungsvorrichtung nach einem der vorstehenden Ansprüche, wobei eine Dichtung (5) zwischen der Basis (7) und dem Linsenelement (1) angeordnet ist.

7. Beleuchtungsvorrichtung nach einem der vorstehenden Ansprüche, wobei mindestens eines der Befestigungslöcher (27) mindestens einen Teil seiner Innenfläche (29) geriffelt, insbesondere mit einem Gewinde versehen, aufweist, um einen formschlüssigen Eingriff mit dem jeweiligen Befestigungselement (11A, 11B) und somit eine mechanische Fixierung desselben zu ermöglichen.

8. Beleuchtungsvorrichtung nach einem der vorstehenden Ansprüche, wobei sowohl die Basis (7) als auch das Linsenelement (1) eine distale Fläche (21, 17) umfassen, die relativ zu dem jeweils anderen Element der Basis (7) und des Linsenelements (1) distal ist, und wobei mindestens eines der Befestigungslöcher (25, 27) einen Abschnitt (31, 31) mit einer erweiterten Querschnittsfläche an der distalen Fläche (17, 21) aufweist, um einen formschlüssigen Eingriff mit dem jeweiligen Befestigungselement (11A, 11B) und somit eine mechanische Fixierung desselben zu ermöglichen.

9. Beleuchtungsvorrichtung nach einem der vorstehenden Ansprüche, wobei mindestens eines der Befestigungselemente (11A, 11B) an der Innenfläche des jeweiligen Befestigungslochs (25, 27) haftet.

10. Beleuchtungsvorrichtung nach einem der vorstehenden Ansprüche, wobei die Basis (7) ein Kühlkörper ist.

11. Beleuchtungsvorrichtung nach einem der vorstehenden Ansprüche, wobei die Basis (7) eine Metallbasis ist.

12. Beleuchtungsvorrichtung nach einem der vorstehenden Ansprüche, wobei jedes der Befestigungselemente (11A, 11B) ein Polymer umfasst.

13. Beleuchtungsvorrichtung nach einem der vorstehenden Ansprüche, wobei jedes der Befestigungselemente (11A, 11B) ein Material umfasst, das aus der Gruppe von Silikonkautschuk, Silikonkleber und Silikondichtstoff ausgewählt ist.

14. Beleuchtungsvorrichtung nach einem der vorstehenden Ansprüche, wobei mindestens eine elastische Klammer (35) das Linsenelement gegen die Basis drückt.

15. Beleuchtungsvorrichtung nach Anspruch 14, wobei die elastische Klemme (35) eine an der Basis (7) befestigte Feder (37) umfasst.

## Revendications

1. Dispositif d'éclairage comprenant une base (7), un agrégat de lumière (3) sur la base (7) et un élément de lentille (1) couvrant l'agrégat de lumière (3) et étant attaché à la base (7), dans lequel l'élément de lentille (1) a une périphérie (1A), dans lequel la base (7) et l'élément de lentille (1) comprennent respectivement une pluralité de trous de montage (27, 25) ayant chacun une surface interne, les trous de montage (25) de l'élément de lentille (1) étant positionnés le long de la périphérie (1A) de l'élément de lentille (1), moyennant quoi des trous de montage (25) de l'élément de lentille (1) sont alignés avec des trous de montage (27) de la base (7) et des éléments de montage (11A, 11B) s'étendent dans des trous de montage alignés respectifs (25, 27) et sont fixés dans lesdits trous de montage (25, 27), ce qui fixe l'élément de lentille (1) à la base (7), **caractérisé en ce que** chacun des éléments de montage (11A, 11B), qui sont positionnés au sein d'une zone cohérente s'étendant le long d'au moins la moitié de la périphérie de l'élément de lentille, en particulier le long d'au moins trois quarts de la périphérie (1A) de l'élément de lentille (1), sont des éléments fléchissant par rapport à la base (7) et l'élément de lentille (1), chacun desdits éléments de montage (11A, 11B) ayant un module de Young plus bas que la base (7) et l'élément de lentille (1).

2. Dispositif d'éclairage selon la revendication 1, dans lequel chacun desdits éléments de montage (11A, 11B) a un module de Young inférieur à 1 GPa.

3. Dispositif d'éclairage selon la revendication 2, dans lequel le module de Young desdits éléments de montage (11A, 11B) est inférieur à 0,1 GPa, en particulier inférieur à 0,05 GPa.

4. Dispositif d'éclairage selon l'une quelconque des revendications précédentes, dans lequel chacun desdits éléments de montage (11A, 11B) a une limite de déformation supérieure à 4 %.

5. Dispositif d'éclairage selon la revendication 4, dans lequel la limite de déformation desdits éléments de montage (11A, 11B) est supérieure à 10 %, en particulier supérieure à 50 % et plus particulièrement supérieure à 200 %.

6. Dispositif d'éclairage selon l'une quelconque des revendications précédentes, dans lequel un joint (5) est positionné entre la base (7) et l'élément de lentille (1).

7. Dispositif d'éclairage selon l'une quelconque des revendications précédentes, dans lequel au moins un des trous de montage (27) a au moins une partie de la surface interne (29) de celui-ci striée, en particulier filetée, pour fournir une mise en prise positive avec l'élément de montage respectif (11A, 11B) et ainsi une fixation mécanique de celui-ci.

8. Dispositif d'éclairage selon l'une quelconque des revendications précédentes, dans lequel chacun parmi ladite base (7) et ledit élément de lentille (1) comprend une surface distale (21, 17), qui est distale par rapport à l'autre respectif parmi ladite base (7) et ledit élément de lentille (1) et dans lequel au moins un des trous de montage (25, 27) a une portion (31, 31) avec une aire en coupe transversale étendue au niveau de la surface distale (17, 21) pour fournir une mise en prise positive avec l'élément de montage respectif (11A, 11B) et ainsi une fixation mécanique de celui-ci.

9. Dispositif d'éclairage selon l'une quelconque des revendications précédentes, dans lequel au moins un des éléments de montage (11A, 11B) adhère à la surface interne du trou de montage respectif (25, 27).

10. Dispositif d'éclairage selon l'une quelconque des revendications précédentes, dans lequel la base (7) est un dissipateur thermique.

11. Dispositif d'éclairage selon l'une quelconque des revendications précédentes, dans lequel la base (7) est une base métallique.

12. Dispositif d'éclairage selon l'une quelconque des revendications précédentes, dans lequel chacun desdits éléments de montage (11A, 11B) comprend un polymère.

13. Dispositif d'éclairage selon l'une quelconque des revendications précédentes, dans lequel chacun desdits éléments de montage (11A, 11B) comprend un matériau choisi dans le groupe constitué de caoutchouc de silicone, adhésif de silicone et mastic à la silicone.

14. Dispositif d'éclairage selon l'une quelconque des revendications précédentes, dans lequel au moins une attache élastique (35) presse l'élément de lentille en direction de la base.

15. Dispositif d'éclairage selon la revendication 14, dans lequel l'attache élastique (35) comprend un ressort (37) fixé à la base (7).
